# EUROPÄISCHE PATENTSCHRIFT

(11) **EP 2 486 099 B1**
(45) Veröffentlichungstag und Bekanntmachung des Hinweises auf die Patenterteilung: **06.11.2013**
(21) Anmeldenummer: 10759822.9
(22) Anmeldetag: 22.09.2010
(51) Int. Cl.: C09B 67/00, G03G 9/09

(54) **LEICHT DISPERGIERBARE PIGMENTZUBEREITUNG AUF BASIS VON C.I. PIGMENT YELLOW 155**
EASILY DISPERSIBLE PIGMENT COMPOSITION OF C.I. PIGMENT YELLOW 155
PRÉPARATION PIGMENTAIRE FACILEMENT DISPERSIBLE À BASE DE PIGMENT C.I. JAUNE 155

(30) Priorität: 07.10.2009 DE 102009048542
(43) Veröffentlichungstag der Anmeldung: 15.08.2012
(73) Patentinhaber: Clariant Finance (BVI) Limited, Road Town, Tortola (VG)
(72) Erfinder: PITARCH LÓPEZ, Jesús, 60486 Frankfurt am Main (DE); ROHR, Ulrike, 69469 Weinheim (DE); RICHTER, Kristin, 55116 Mainz (DE); RUIZ FERNANDEZ, Eusebio, 65812 Bad Soden a. Ts. (DE); BAUR, Ruediger, 65817 Eppstein-Niederjosbach (DE)
(74) Vertreter: Hütter, Klaus
(86) Internationale Anmeldenummer: PCT/EP2010/005799
(87) Internationale Veröffentlichungsnummer: WO 2011/042120

(56) Entgegenhaltungen:
- EP-A1- 0 022 746
- EP-A1- 0 908 789
- EP-A2- 0 168 748
- JP-A- 58 215 662
- JP-A- 2009 086 331
- JP-A- 2009 175 632
- US-A- 4 299 898
- US-A- 4 759 801

## Beschreibung

Die vorliegende Erfindung liegt auf dem Gebiet der leicht dispergierbaren Pigmentzubereitungen, insbesondere für Anwendungen in elektrophotographischen Tonern und Entwicklern.
Die Oberflächenmodifizierung von Pigmenten mit Hilfe von Pigmentderivaten und niedermolekularen Verbindungen ist bekannt, jedoch ist die Performance im Hinblick auf gute Dispergierbarkeit im Anwendungsmedium vielfach nicht ausreichend und bedarf einer gezielten Auswahl der Polymerhülle.

Aus der EP-A-0 908 789 ist bekannt, C.I. Pigment Yellow 155 in elektrophotographischen Tonern und Entwicklern, Pulverlacken und Farbfiltern als Gelbpigment einzusetzen.
Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z. B. Magnettoner, Flüssigtoner oder Polymerisationstoner im Einsatz. Unter Polymerisationstonem sind solche Toner zu verstehen, die z. B. durch Suspensionspolymerisation (Kondensation) oder Emulsionspolymerisation entstehen und zu verbesserten Teilcheneigenschaften des Toners führen. Weiterhin sind auch solche Toner gemeint, die in nicht-wässrigen Dispersionen erzeugt werden.

Die traditionelle Herstellung von Tonern zur Entwicklung elektrostatischer Bilder erfolgt durch Vermischen der Inhaltsstoffe wie Pigment, Trägerharz (Tonerbindemittel) und andere Tonerinhaltsstoffe in der Schmelze (z. B. in einem Extruder) und anschließender Mahlung und Sichtung.
In den letzten Jahren wurde der Fokus mehr und mehr auf chemische Verfahren zur Herstellung von Tonern gelegt. Es gibt viele verschiedene Prozesse zur

Herstellung dieser sogenannten "chemischen Toner". Diese umfassen z. B. Suspensions- oder Emulsionspolymerisationen, Lösungs-Dispersions-Prozesse und Aggregations-Prozesse.
Im Unterschied zum klassischen Prozess des Mischens in der Schmelze werden in den chemischen Tonerherstellungsprozessen die Inhaltsstoffe in der Regel in Flüssigkeiten (Wasser, Lösungsmittel, Monomergemischen) dispergiert. Dies stellt neue Anforderungen an die verwendeten Inhaltsstoffe, insbesondere die Pigmente und Ladungssteuermittel, da sie den chemischen Tonerherstellungsprozess maßgeblich beeinflussen können.

Ein wichtiger Aspekt bei Prozessen, die in einem Zweiphasensystem ablaufen (wie z. B. bei der Suspensions- oder Emulsionspolymerisation) ist z. B. die Affinität der Tonerinhaltstoffe zu den jeweiligen Phasen. So ist z. B. bei der Suspensionspolymerisation gewünscht, dass die Tonerinhaltsstoffe in der Monomerphase verbleiben und nicht in die Wasserphase übertreten. Nur so ist sichergestellt, dass die Tonerinhaltsstoffe nach der erfolgten Polymerisation im fertigen Tonerteilchen enthalten sind. Weiterhin beeinflussen alle Komponenten die physikalischen Eigenschaften (wie z. B. die Viskosität) der flüssigen Phasen und damit die Bildung der Monomertröpfchen, in denen die Polymerisation erfolgt.

Die vorliegende Erfindung hatte zur Aufgabe, eine Pigmentzubereitung auf Basis eines P. Y. 155 zur Verfügung zu stellen, die in chemischen Tonerherstellungsprozessen einsetzbar ist.
Ziel war es, in einem einfachen und kostengünstigen Verfahren eine Pigmentzubereitung herzustellen, die beim Dispergieren in für chemische Tonerprozesse üblichen Monomergemischen eine gute Dispergierbarkeit (schnelle Farbstärkeentwicklung bei niedrigen Scherkräften) aufweist, eine niedrige Viskosität der Pigmentdispersion ergibt sowie eine hohe Hydrophobizität aufweist.

Keine zur Einfärbung von Kunststoffen, zur Herstellung von Druckfarben oder -tinten, von Lacken oder in konventionellen Tonerprozessen bekannte Pigmentzubereitung auf Basis P.Y. 155 kann alle diese Eigenschaften in ausreichendem Maße erfüllen.

Überraschenderweise wurde gefunden, dass die nachfolgend beschriebene Pigmentzubereitung die oben genannten Anforderungen erfüllen kann.

Gegenstand der vorliegenden Erfindung sind feste Pigmentzubereitungen enthaltend
A) 5 bis 99 Gew.-%, vorzugsweise 40 bis 95 Gew.-%, eines Azopigments der Formel (1) 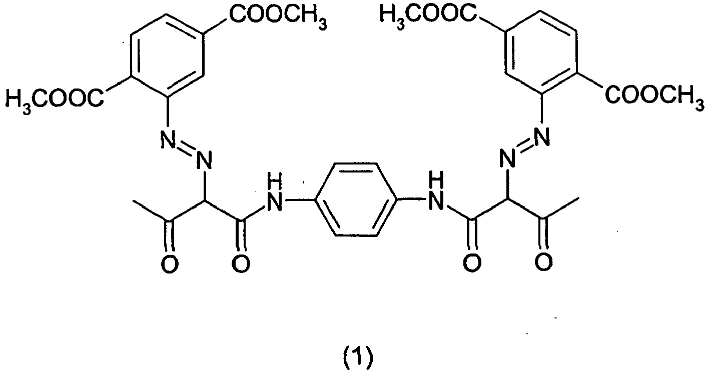
(B) 1 bis 95 Gew.-%, vorzugsweise 5 bis 60 Gew.-% eines Copolymers, enthaltend die folgenden Struktureinheiten:
   (i) 1 bis 70 mol-%, vorzugsweise 5 bis 60 mol-%, Struktureinheit B1 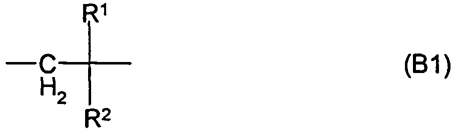
   (ii) 1 bis 70 mol-%, vorzugsweise 5 bis 60 mol-%, Struktureinheit B2 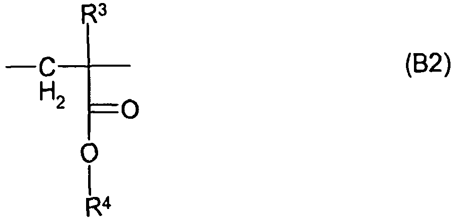
   (iii) 1 bis 70 mol-%, vorzugsweise 5 bis 60 mol-%, Struktureinheit B3 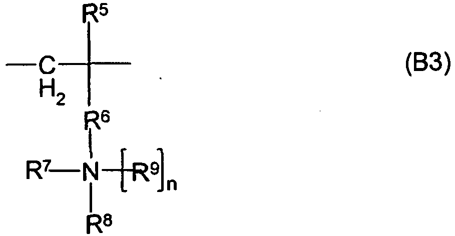
   wobei
   - R¹, R³ und R⁵: unabhängig voneinander Wasserstoff oder C₁-C₄-Alkyl sind,
   - R²: für C₁-C₆₀-Alkyl, C₆-C₁₈-Aryl, C₁-C₄-Alkylen-C₆-C₁₂-aryl oder C₃-C₁₈-Heteroaryl steht,
   - R⁴: lineares oder verzweigtes C₁-C₄₀-Alkyl, C₅-C₃₀-Cycloalkyl, C₁-C₄-Alkylen-C₆-C₁₂-aryl oder C₆-C₃₀-Aryl bedeutet
   - R⁶: -COO-(CH₂)ₚ- bedeutet
   - p: für eine Zahl zwischen 1 und 8 steht
   - R⁷, R⁸ und R⁹,: unabhängig voneinander Wasserstoff, lineares oder verzweigtes C₁-C₄₀-Alkyl, C₅-C₃₀-Cycloalkyl, C₆-C₃₀-Aryl oder Benzyl bedeuten, und
   - n: eine Zahl von Null bis 1, vorzugsweise 0,5 bis 0,99, ist.

Die Zahl n steht für den Quaternisierungsgrad der Amingruppe und liegt zwischen 0 und 100 mol-%, vorzugsweise zwischen 50 und 99 mol-%.

Die vorgenannten Alkyl-, Cycloalkyl- und Arylreste können gegebenenfalls substituiert sein. Geeignete Substituenten sind beispielsweise (C₁-C₆)-Alkyl, Halogene, wie Fluor, Chlor, Brom und Jod, bevorzugt Chlor, Hydroxy und (C₁-C₆)-Alkoxy.
- R¹, R³ und R⁵: bedeuten vorzugsweise Wasserstoff oder Methyl.
- R²: bedeutet vorzugsweise C₆-C₃₀-Alkyl, C₆-C₁₀-Aryl, Benzyl, fünf- oder sechsgliedrige aromatische stickstoffhaltige C₃-C₉-Heterocyclen.
- R⁴: bedeutet vorzugsweise C₁-C₂₀-Alkyl, C₅-C₆-Cycloalkyl, Benzyl, Phenyl oder Naphthyl.
- P: bedeutet vorzugsweise 1, 2, 3, 4, 5 oder 6.
- R⁷, R³ und R⁹: bedeuten vorzugsweise Wasserstoff, C₁-C₈-Alkyl, C₅-C₆-Cycloalkyl, Phenyl und Benzyl.

Gegenstand der Erfindung ist weiterhin eine Pigmentzubereitung, dadurch gekennzeichnet, dass das Copolymer (B) zu
(i) 1 bis 70 mol-%, vorzugsweise 5 bis 60 mol-%, aus der Struktureinheit B1,
(ii) 1 bis 70 mol-%, vorzugsweise 5 bis 60 mol-%, aus der Struktureinheit B2 und
(iii) 1 bis 70 mol-%, vorzugsweise 5 bis 60 mol-%, aus der Struktureinheit B3 besteht.

Die Struktureinheit B1 leitet sich von den alpha, beta-ungesättigten Olefinen der allgemeinen Formel (b1) ab.

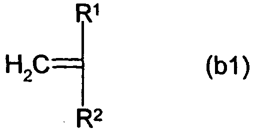

Beispielhaft seien die folgenden alpha, beta-ungesättigten Olefine genannt: Styrol, alpha-Methylstyrol, Dimethylstyrol, alpha-Ethylstyrol, Diethylstyrol, i-Propylstyrol, tert.-Butylstyrol, 1-Vinylimidazol, 2-Vinylpyridin und alpha-Olefine, wie Decen, Dodecen, Tetradecen, Pentadecen, Hexadecen, Octadecen, C₂₀-alpha-Olefin, C₂₄-alpha-Olefin oder C₃₀-alpha-Olefin.

Die Struktureinheit B2 leitet sich von Estern ethylenisch ungesättigter Monocarbonsäuren der allgemeinen Formel (b2) ab.

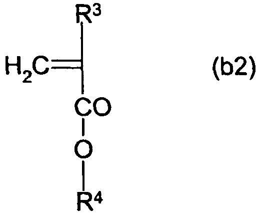

Beispiele dafür sind: Methyl-, Ethyl-, Propyl-, Isopropyl-, n-Butyl-, t-Butyl, Pentyl-, Hexyl-, 2-Ethylhexyl-, 2-Hydroxyethyl, Nonyl-, Lauryl-, Cyclohexyl-, Isobornyl-(meth)acrylat sowie Phenyl-, Naphthyl- und Benzyl(meth)acrylat.

Die Struktureinheit B3 leitet sich von Estern ethylenisch ungesättigter Monocarbonsäuren der allgemeinen Formel (b3) ab, die vor oder nach der Polymerisierung quaternisiert werden können.

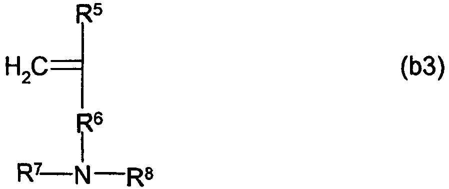

Als Beispiel davon seien folgende Monomere genannt: 2-Aminoethyl-, N,N-Diethylaminoethyl-, N,N-Dimethylaminoethyl-, N,N-Dipropylaminoethyl-, N,N-Dibutylaminoethyl-, N,N-Dihexylaminoethyl-, N,N-Diethylaminobutyl-, N,N-Dimethylaminobutyl-, N,N-Dipropylaminobutyl-, N,N-Dibutylaminobutyl-, N,N-Dihexylaminobutyl-, N,N-Diethylaminopropyl-, N,N-Dimethylaminopropyl-, N,N-Dipropylaminopropyl-, N,N-Dibutylaminopropyl-, N,N-Dihexylaminopropyl-, N,N-Diethylaminohexyl-, N,N-Dimethylaminohexyl-, N,N-Dipropylaminohexyl-, N,N-Dibutylaminohexyl- und N,N-Dihexylaminohexyl-(meth)acrylat.

Als Quaternisierungsmittel können alle Arten von organischen und anorganischen Säuren verwendet werden und/oder Alkylierungsmittel, wie zum Beispiel Methyliodid, Dimethylsulfat oder Benzylchlorid.

Die Copolymere sind an sich bekannt und können mittels dem Fachmann bekannter Polymerisationsmethoden, insbesondere durch radikalische Polymerisation, hergestellt werden. Darüber hinaus können die Copolymere mittels dem Fachmann bekannter kontrollierter Polymerisationsmethoden wie z. B. "Reversible Addition Fragmentation Chain Transfer Process" (RAFT), "Nitroxide-Mediated Polymerisation (NMP), "Atom Transfer Radical Polymerization" (ATRP) und "Group Transfer Polymerization" (GTP) hergestellt werden.
Die Molmasse der geeigneten Copolymere liegt vorzugsweise zwischen 1.000 und 100.000 g/mol. Besonders geeignete Copolymere haben Molmassen zwischen 2.000 und 30.000 g/mol. Die Copolymere können statistisch, alternierend, gradientartig oder blockartig aufgebaut sein.

C.I. Pigment Yellow 155 kann in handelsüblichen Qualitäten eingesetzt werden und liegt in der erfindungsgemäßen Pigmentzubereitung vorzugsweise in einer Teilchengröße (d₅₀) von 30 bis 500 nm, vorzugsweise 50 bis 350 nm, vor.

Die erfindungsgemäßen Pigmentzubereitungen können übliche Hilfsmittel aus der Gruppe der Füllstoffe, Flammschutzmittel, Konservierungsmittel, Lichtschutzmittel, pigmentären und nicht pigmentären Dispergatoren, Tenside, Antioxidationsmittel, Harze, Wachse, Entschäumer, Antistatika oder Ladungssteuermittel enthalten, vorzugsweise in den üblichen Mengen von 0,1 bis 20 Gew.-%, bezogen auf das Gesamtgewicht der Pigmentzubereitung.

Gegenstand der vorliegenden Erfindung ist weiterhin ein Verfahren zur Herstellung der vorstehend beschriebenen, festen Pigmentzubereitungen, dadurch gekennzeichnet, dass man das Pigment der Formel (1) in Form von Pulver, Granulat, Presskuchen oder Suspension in Gegenwart von Wasser oder einem organischen Lösungsmittel oder einem Gemisch aus Wasser und organischem Lösungsmittel mit mindestens einem Copolymer (B) und gegebenenfalls besagten üblichen Hilfsmitteln vermischt und anschließend in fester Form isoliert.

Zweckmäßigerweise erfolgt die Herstellung der erfindungsgemäßen Pigmentzubereitung, indem man eine wässrige Pigmentsuspension mit dem Copolymer zusammenrührt und anschließend abfiltriert, trocknet und pulverisiert. Die unten beschriebenen Verfahrensschritte (Dispergierung und/oder Finish in Gegenwart des Copolymers) können je nach gewünschter Produkteigenschaft vorteilhaft sein, sind aber nicht unbedingt erforderlich.
Eine besonders vorteilhafte Vermischung kann durch den Einsatz eines Mahl- oder Dispergieraggregats erreicht werden. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden.
Die Feindispergierung bzw. Mahlung der erfindungsgemäßen Pigmentzubereitung erfolgt dabei bis zur gewünschten Teilchengrößenverteilung und kann bei Temperaturen im Bereich von 0 bis 100°C erfolgen, zweckmäßig bei einer Temperatur zwischen 10 und 70 °C, vorzugsweise bei 20 bis 60 °C.
Die so erhaltene feindispergierte Pigmentzubereitung kann weiterhin einem Finish unterworfen werden. Der Finish wird zweckmäßigerweise in dem vorliegenden organischen Lösemittel, Wasser oder Wasser-Lösemittel-Gemisch bei einer Temperatur von 50 bis 250 °C, besonders 70 bis 200 °C, insbesondere 100 bis 190 °C, und zweckmäßigerweise für eine Zeit von 5 Minuten bis 24 Stunden, besonders 5 Minuten bis 18 Stunden, insbesondere 5 Minuten bis 6 Stunden, durchgeführt. Bevorzugt wird der Finish bei Siedetemperatur, auch bei Temperaturen oberhalb des Siedepunktes des Lösemittelsystems unter Druck durchgeführt. Falls eine rein wässrige Pigmentdispersion bevorzugt wird, kann das ggf. eingesetzte Lösemittel mit Hilfe einer Wasserdampfdestillation entfernt werden.

Die erfindungsgemäße Pigmentzubereitung wird in fester Form isoliert, beispielsweise durch Filtration, Dekantation, Zentrifugation, Sprühtrocknung, Wirbelschichttrocknung, Bandtrocknung, Sprühgranulierung oder Trocknung im Schaufeltrockner. Die Isolierung der erfindungsgemäßen Pigmentzubereitung erfolgt vorzugsweise durch Filtration und abschließende Trocknung. Falls die erhaltene Pigmentzubereitung grobkörnig anfällt, wird sie zweckmäßigerweise noch einer Mahlung, z. B. Trockenmahlung, unterzogen.

Die erfindungsgemäße Pigmentzubereitung weist im Vergleich zum herkömmlichen P.Y.155 eine höhere Hydrophobizität und eine niedrigere Viskosität der Pigmentdispersion auf und erfüllt somit besser die Anforderungen beim Herstellungsprozess von chemischen Tonern.

Die erfindungsgemäße Pigmentzubereitung ist geeignet als Farbmittel in elektrophotographischen Tonern und Entwicklern, wie beispielsweise Ein- oder Zweikomponentenpulvertonern (auch Ein- oder Zweikomponenten-Entwickter genannt), Magnettoner, Flüssigtoner, Latextoner, Polymerisationstoner sowie Spezialtoner. Dabei kann die erfindungsgemäße Pigmentzubereitung in einem Bunttoner als alleiniges Farbmittel oder in Kombination mit anderen gelben Farbmitteln, aber auch zum Nuancieren anderer Farbtöne mit Farbmitteln anderer Farbtöne eingesetzt werden.
Um elektrophotographische Bunttoner herzustellen, auch als Farbset zweier oder mehrerer der Farben Schwarz, Cyan, Gelb, Magenta, Grün, Orange, Rot und Blau werden Farbmittel wie organische Buntpigmente, anorganische Pigmente oder Farbstoffe, üblicherweise in Form von Pulvern, Dispersionen, Presskuchen, Lösungen oder Masterbatches zugesetzt. Die organischen Buntpigmente können aus der Gruppe der Azopigmente oder polycyclischen Pigmente oder Mischkristalle (solid solutions) solcher Pigmente sein.

Bevorzugte Blau- und/oder Grünpigmente sind Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 60, 62, 68, 80, Pigment Green 1, 4, 7, 45; Orange-Pigmente, wie z. B. P.O. 5, 62, 36, 34, 13, 43, 71; Gelbpigmente, wie z. B. P.Y. 12, 13, 14, 17, 74, 83, 93, 97, 111, 122,139, 151, 155, 180, 174, 175, 185, 188,191, 213, 214, Rot-Pigmente, wie z. B. P.R. 48, 57, 122, 146, 147, 149, 150, 184, 185, 186, 202, 207, 209, 238, 254, 255, 269, 270, 272, Violett-Pigmente wie P.V. 1, 19, Ruß, Eisen/ManganOxide; weiterhin Mischkristalle aus C.I. Pigment Violett 19 und C.I. Pigment Red 122.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z. B. Direct, Reactive und Acid Dyes, sowie lösemittellösliche Farbstoffe, wie z. B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Gegenstand der vorliegenden Erfindung ist auch ein elektrophotographischer Toner, enthaltend 30 bis 99,99 Gew.-%, vorzugsweise 40 bis 99,5 Gew.-%, eines üblichen Bindemittels, beispielsweise Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, Polyethylen, Polypropylen, Cycloolefincopolymere oder "bio-basierende" Polymere (hergestellt aus nachwachsenden Rohstoffen wie Sojabohnen oder Mais) oder Kombination daraus, 0,001 bis 50 Gew.-%, vorzugsweise 0,05 bis 20 Gew.-%, der erfindungsgemäßen Pigmentzubereitung, gegebenenfalls 0,001 bis 50 Gew.-%, vorzugsweise 0,05 bis 20 Gew.-% eines weiteren Farbmittels, gegebenenfalls 0,01 bis 50% Gew.-%, vorzugsweise 0,01 bis 20 Gew.-% eines Wachses, und gegebenenfalls 0,01 bis 50 Gew.-%, vorzugsweise 0,05 bis 20 Gew.-%, besonders bevorzugt 0,1 bis 5 Gew.-%, mindestens eines Ladungssteuermittels, jeweils bezogen auf das Gesamtgewicht des elektrophotographischen Toners. Des Weiteren ist die erfindungsgemäße Pigmentzubereitung geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem ist die erfindungsgemäße Pigmentzubereitung als Farbmittel in Ink-Jet Tinten auf wässriger und nichtwässriger Basis, Mikroemulsionstinten, UV-Tinten sowie in solchen Tinten, die nach dem Hot-melt-Verfahren arbeiten, geeignet. Ink-Jet-Tinten enthalten im Allgemeinen insgesamt 0,5 bis 50 Gew.-%, vorzugsweise 1 bis 25 Gew.-%, (trocken gerechnet) der erfindungsgemäßen Pigmentzubereitung.
Mikroemulsionstinten basieren auf organischen Lösemitteln, Wasser und ggf. einer zusätzlichen hydrotropen Substanz (Grenzflächenvermittler).
Mikroemulsionstinten enthalten im Allgemeinen 0,5 bis 15 Gew.-%, vorzugsweise 1,5 bis 8 Gew.-%, der erfindungsgemäßen Pigmentzubereitung, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% der erfindungsgemäßen Pigmentzubereitung, 85 bis 99,5 Gew.-% organisches Lösungsmittel und/oder hydrotrope Verbindungen. Typische organische Lösemittel sind Ester, Ketone, Acetate, Alkohole, einzeln oder in Abmischungen. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 °C und ca. 140 °C liegt. Hot-Melt Ink-Jet-Tinten bestehen z. B. im Wesentlichen aus 20 bis 90 Gew.-% Wachs und 1 bis 10 Gew.-% der erfindungsgemäßen Pigmentzubereitung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z. B. Kristallisation der Wachse) sowie 0 bis 2 Gew.-% Antioxidans enthalten sein. UV-Tinten bestehen typischerweise aus Monomeren niedrigmolekularer Mono-, Di-, Tri-, Tetra-, und/oder Penta-funktionaler Acrylate und/oder Acrylat, Urethan, Epoxy, oder Polyester basierender Oligomere. Die UV Tinten werden typischerweise kationisch, anionisch oder radikalisch initiiert/vernetzt.

Weiterhin ist die erfindungsgemäße Pigmentzubereitung auch als Farbmittel für Farbfilter, sowohl für die additive wie auch für die subtraktive Farberzeugung, sowie als Farbmittel für elektronische Tinten ("electronic inks" bzw "e-inks") oder "electronic paper "("e-paper") geeignet.
Bei der Herstellung sogenannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelatine, Caseine) auf die jeweiligen LCD-Bauteilen (z. B. TFT-LCD = Thin Film Transistor Liquid Crystal Displays oder z. B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die erfindungsgemäße Pigmentzubereitung eignet sich natürlich auch zum Pigmentieren und Färben von natürlichen und synthetischen Materialien aller Art, insbesondere von Anstrichmitteln, Beschichtungssystemen, wie Tapetenfarben, Druckfarben, Dispersions- und Lackfarben, die wasser- und/oder lösemittelhaltig sind.

Ferner eignet sich die erfindungsgemäße Pigmentzubereitung zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, und Schleifmitteln.

Zudem kann die erfindungsgemäße Pigmentzubereitung zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Allgemeine Vorschrift zur Herstellung der erfindungsgemäßen Pigmentzubereitung:
60 g handelsübliches C.I.Pigment Yellow 155 (Toner^{®} Yellow 3GP) in Form eines wasserfeuchten Presskuchens (35 Gew.-%) wurden mit 6,8 g des fertigen Copolymers in 1.000 g Wasser 1 Stunde bei 50 °C vermischt. Anschließend wurde das oberflächenbelegte Pigment abfiltriert und mit Wasser auf eine Leitfähigkeit (Filtrat) < 0,5 mS/cm gewaschen. Das belegte Pigment wurde bei 80 °C im Umluftrockenschrank getrocknet und anschließend pulverisiert. 65 g Pigmentzubereitung wurden erhalten.

### Beispiele 1 bis 6:

Hergestellt nach der allgemeinen Vorschrift durch Zugabe der Copolymere 1 bis 6 aus der Tabelle 1.
Kontrollbeispiel: Kein Copolymer wurde zugegben.

**Tabelle 1: Zusammensetzung der (fertigen) Copolymere**

| Copolymer | Monomer 1 (mol-%) | Monomer 2 (mol-%) | Monomer 3 (mol-%) |
|---|---|---|---|
| 1 | 35 % ST | 35 % BMA | 30 % DMAEMA-Bz |
| 2 | 44 % ST | 20 % MMA | 36 % DMAEMA |
| 3 | 44 % ST | 20 % EHMA | 36 % DMAEMA |
| 4 | 35 % ST | 35 % HEMA | 30 % DMAEMA |
| 5 | 35 % ST | 35 % IBMA | 30 % DMAEMA |
| 6 | 15 % VI | 60 % MMA | 25 % DMAEMA |

| | | | |
|---|---|---|---|
| IBMA = Isobornylmethacrylat ST= Styrol BMA = n-Butylmethacrylat MMA = Methylmethacrylat DMAEMA = N,N-Dimethylaminoethylmethacrylat DMAEMA-Bz = N,N-Dimethylaminoethylmethacrylat quaternisiert mit Benzylchlorid EHMA = 2-Ethylhexylmethacrylat HEMA = 2-Hydroxyethylmethacrylat VI = Vinylimidazol | | | |

### Testmethoden:

### 1. Viskosität:

Die Pigmentzubereitung wird in einer Konzentration von 5 % unter Zugabe von Glasperlen auf einem paint shaker in Styrol dispergiert. Nach Abtrennen der Glasperlen mittels eines Siebes wird an dieser Dispersion mittels eines Kegel-Platte-Viskosimeters eine Viskositätskurve (T = 23 °C, Scherrate 0-250s⁻¹ in 60 sec) aufgenommen. In der Tabelle sind die Werte bei einer Scherrate von 250 s⁻¹ angegeben.

### 2. Hydrophobizität:

0,1 g Pigment werden zu 10 g Wasser gegeben. Es wird beobachtet, ob das Pigment auf der Wasseroberfläche verbleibt (Hydrophobizität hoch) oder durch das Wasser benetzt wird und zu Boden sinkt (Hydrophobizität niedrig). Anschließend wird das Pigment/Wasser-Gemisch kurz per Hand geschüttelt und anschließend abermals visuell bewertet.

### Bewertung:

- ++ =: sehr hohe Hydrophobizität (Pigment benetzt nicht und verbleibt auf der Wasseroberfläche),
- + =: hohe Hydrophobizität (größter Teil der Probenmenge verbleibt auf der Wasseroberfläche, Einfärbung der Wasserphase),
- -: = niedrige Hydrophobizität (Pigment benetzt mit Wasser und sinkt zu Boden)

| Probe | Viskosität | Hydrophobizität vor Schütteln | Hydrophobizität nach Schütteln |
|---|---|---|---|
| | (mPas) | (visuell) | (visuell) |
| Beispiel 1 | 120 | ++ | ++ |
| Beispiel 2 | 130 | ++ | ++ |
| Beispiel 3 | 119 | ++ | ++ |
| Beispiel 4 | 127 | ++ | + |
| Beispiel 5 | 110 | ++ | ++ |
| Beispiel 6 | 130 | ++ | ++ |
| | | | |
| Kontrolle | 148 | ++ | + |

## Patentansprüche

1. Feste Pigmentzubereitung enthaltend
A) 5 bis 99 Gew.-% eines Azopigments der Formel (1) 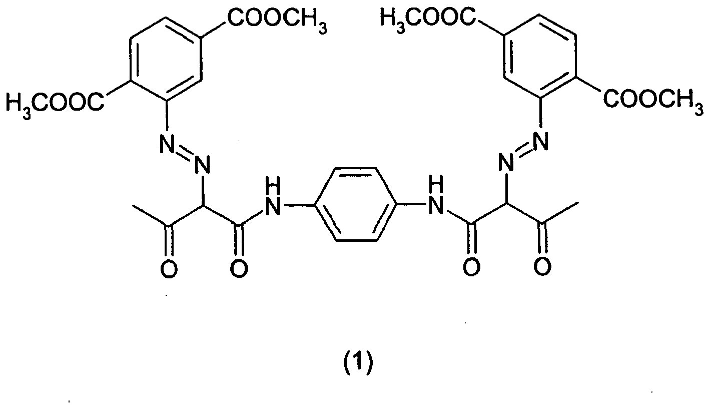
(B) 1 bis 95 Gew.-% eines Copolymers, enthaltend die folgenden Struktureinheiten:
(i) 1 bis 70 mol-% der Struktureinheit B1 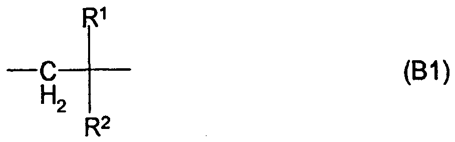
(ii) 1 bis 70 mol-% der Struktureinheit B2 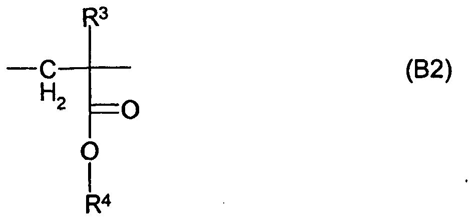
(iii) 1 bis 70 mol-% der Struktureinheit B3 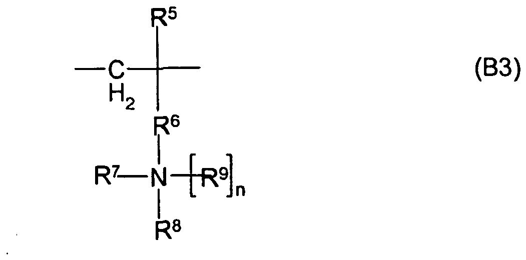
wobei
R¹, R³ und R⁵ unabhängig voneinander Wasserstoff oder C₁-C₄-Alkyl sind,
R² für C₁-C₆₀-Alkyl, C₆-C₁₈-Aryl, C₁-C₄-Alkylen-C₆-C₁₂-aryl oder C₃-C₁₈-Heteroaryl steht,
R⁴ lineares oder verzweigtes C₁-C₄₀-Alkyl, C₅-C₃₀-Cycloalkyl, C₁-C₄-Alkylen-C₆-C₁₂-aryl oder C₆-C₃₀-Aryl bedeutet
R⁶ -COO-(CH₂)ₚ- bedeutet
p für eine Zahl zwischen 1 und 8 steht
R⁷, R⁸ und R⁹ unabhängig voneinander Wasserstoff, lineares oder verzweigtes C₁-C₄₀-Alkyl, C₅-C₃₀-Cycloalkyl, C₆-C₃₀-Aryl oder Benzyl bedeuten, und
n für eine Zahl zwischen Null und 1 steht.

2. Pigmentzubereitung nach Anspruch 1, enthaltend
(A) 40 bis 95 Gew.-% eines Azopigments der Formel (1) und
(B) 5 bis 60 Gew.-% des Copolymers.

3. Pigmentzubereitung nach Anspruch 1 oder 2, **dadurch gekennzeichnet, dass** das Copolymer (B)
(i) 5 bis 60 mol-% der Struktureinheit B1,
(ii) 5 bis 60 mol-% der Struktureinheit B2 und
(iii) 5 bis 60 mol-% der Struktureinheit B3 enthält.

4. Pigmentzubereitung nach einem oder mehreren der Ansprüche 1 bis 3, **dadurch gekennzeichnet, dass** das Copolymer (B) zu
(i) 1 bis 70 mol-% aus der Struktureinheit B1,
(ii) 1 bis 70 mol-% aus der Struktureinheit B2 und
(iii) 1 bis 70 mol-% aus der Struktureinheit B3 besteht.

5. Pigmentzubereitung nach einem oder mehreren der Ansprüche 1 bis 4, **dadurch gekennzeichnet, dass** das Copolymer (B) zu
(i) 5 bis 60 mol-% aus der Struktureinheit B1,
(ii) 5 bis 60 mol-% aus der Struktureinheit B2 und
(iii) 5 bis 60 mol% aus der Struktureinheit B3 besteht.

6. Pigmentzubereitung nach einem oder mehreren der Ansprüche 1 bis 4, **dadurch gekennzeichnet, dass** R¹, R³ und R⁵ gleich oder verschieden sind und Wasserstoff oder Methyl bedeuten.

7. Pigmentzubereitung nach einem oder mehreren der Ansprüche 1 bis 5, **dadurch gekennzeichnet, dass** R² C₆-C₃₀-Alkyl, C₆-C₁₀-Aryl, Benzyl, fünf- oder sechsgliedrige aromatische stickstoffhaltige C₃-C₉-Heterocyclen bedeutet.

8. Pigmentzubereitung nach einem oder mehreren der Ansprüche 1 bis 6, **dadurch gekennzeichnet, dass** R⁴ C₁-C₂₀-Alkyl, C₅-C₆-Cycloalkyl, Benzyl, Phenyl oder Naphthyl bedeutet.

9. Pigmentzubereitung nach einem oder mehreren der Ansprüche 1 bis 7, **dadurch gekennzeichnet, dass** R⁷, R⁸ und R⁹ gleich oder verschieden sind und Wasserstoff, C₁-C₈-Alkyl, C₅-C₆-Cycloalkyl, Phenyl oder Benzyl bedeuten.

10. Pigmentzubereitung nach einem oder mehreren der Ansprüche 1 bis 8, **dadurch gekennzeichnet, dass** das Pigment der Formel (1) eine Teilchengröße (d₅₀) von 30 bis 500 nm, hat.

11. Pigmentzubereitung nach einem oder mehreren der Ansprüche 1 bis 9, enthaltend Hilfsmittel aus der Gruppe der Füllstoffe, Flammschutzmittel, Konservierungsmittel, Lichtschutzmittel, pigmentären und nicht pigmentären Dispergatoren, Tenside, Antioxidationsmittel, Harze, Wachse, Entschäumer, Antistatika oder Ladungssteuermittel.

12. Verfahren zur Herstellung der Pigmentzubereitungen nach einem oder mehreren der Ansprüche 1 bis 10, **dadurch gekennzeichnet, dass** man das Pigment der Formel (1) in Form von Pulver, Granulat, Presskuchen oder Suspension in Gegenwart von Wasser oder einem organischen Lösungsmittel oder einem Gemisch aus Wasser und organischem Lösungsmittel mit mindestens einem Copolymer (B) vermischt und anschließend in fester Form isoliert.

13. Verwendung der Pigmentzubereitung nach einem oder mehreren der Ansprüche 1 bis 10 zum Pigmentieren und Färben von natürlichen und synthetischen Materialien.

14. Verwendung nach Anspruch 12 zum Pigmentieren von Tapetenfarben, Druckfarben, Dispersions- und Lackfarben, elektrophotographischen Tonern und Entwicklern, Ink-Jet-Tinten, und Farbfiltern.

15. Elektrophotographischer Toner, enthaltend 30 bis 99,99 Gew.-% eines Bindemittels, 0,001 bis 50 Gew.-% der Pigmentzubereitung gemäß einem oder mehreren der Ansprüche 1 bis 10, gegebenenfalls 0,001 bis 50 Gew.-% eines weiteren Farbmittels, gegebenenfalls 0,01 bis 50 Gew.-% eines Wachses, und gegebenenfalls 0,01 bis 50 Gew.-% eines Ladungssteuermittels, jeweils bezogen auf das Gesamtgewicht des elektrophotographischen Toners.

## Claims

1. A solid pigment preparation containing
A) 5% to 99% by weight of an azo pigment of formula (1) 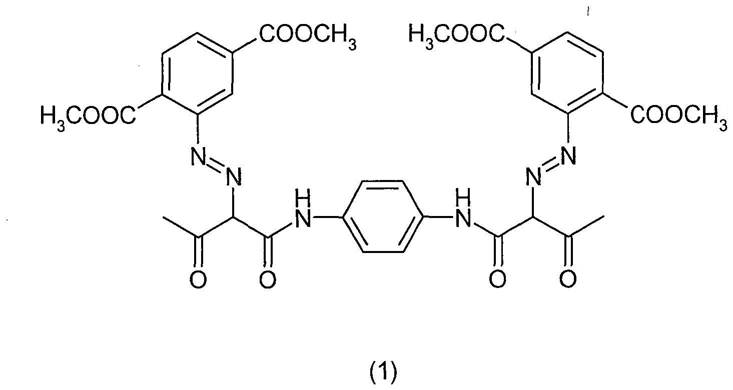
(B) 1 % to 95% by weight of a copolymer containing the following structural units:
(i) 1 to 70 mol% of structural unit B1 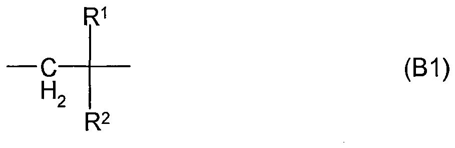
(ii) 1 to 70 mol% of structural unit B2 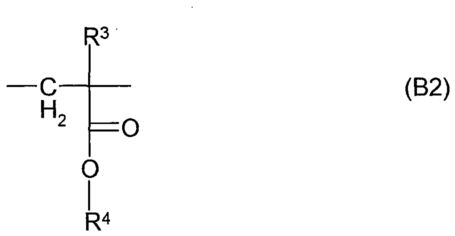
(iii) 1 to 70 mol% of structural unit B3 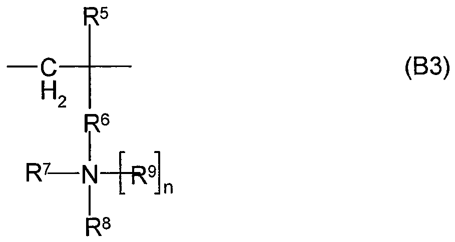
where
R¹, R³ and R⁵ are each independently hydrogen or C₁-C₄-alkyl,
R² is C₁-C₆₀-alkyl, C₆-C₁₈-aryl, C₁-C₄-alkylene-C₆-C₁₂-aryl or C₃-C₁₈-hetaryl,
R⁴ is linear or branched C₁-C₄₀-alkyl, C₅-C₃₀-cycloalkyl, C₁-C₄-alkylene-C₆-C₁₂-aryl or C₆-C₃₀-aryl,
R⁶ is -COO-(CH₂)ₚ-,
p is between 1 and 8,
R⁷, R⁸ and R⁹ are each independently hydrogen, linear or branched C₁-C₄₀-alkyl, C₅-C₃₀-cycloalkyl, C₆-C₃₀-aryl or benzyl, and
n is between zero and 1.

2. The pigment preparation as claimed in claim 1, containing
(A) 40% to 95% by weight of an azo pigment of formula (1), and
(B) 5% to 60% by weight of the copolymer.

3. The pigment preparation as claimed in claim 1 or 2, **characterized in that** the copolymer (B) contains
(i) 5 to 60 mol% of structural unit B1,
(ii) 5 to 60 mol% of structural unit B2, and
(iii) 5 to 60 mol% of structural unit B3.

4. The pigment preparation as claimed in one or more of claims 1 to 3, **characterized in that** the copolymer (B) consists of
(i) structural unit B1 to an extent from 1 to 70 mol%,
(ii) structural unit B2 to an extent from 1 to 70 mol%, and
(iii) structural unit B3 to an extent from 1 to 70 mol%.

5. The pigment preparation as claimed in one or more of claims 1 to 4, **characterized in that** the copolymer (B) consists of
(i) structural unit B1 to an extent from 5 to 60 mol%,
(ii) structural unit B2 to an extent from 5 to 60 mol%, and
(iii) structural unit B3 to an extent from 5 to 60 mol%.

6. The pigment preparation as claimed in one or more of claims 1 to 4, **characterized in that** R¹, R³ and R⁵ are the same or different and are each hydrogen or methyl.

7. The pigment preparation as claimed in one or more of claims 1 to 5, **characterized in that** R² is C₆-C₃₀-alkyl, C₆-C₁₀-aryl, benzyl, five- or six-membered aromatic nitrogen-containing C₃-C₉-heterocycles.

8. The pigment preparation as claimed in one or more of claims 1 to 6, **characterized in that** R⁴ is C₁-C₂₀-alkyl, C₅-C₆-cycloalkyl, benzyl, phenyl or naphthyl.

9. The pigment preparation as claimed in one or more of claims 1 to 7, **characterized in that** R⁷, R⁸ and R⁹ are the same or different and are each hydrogen, C₁-C₈-alkyl, C₅-C₆-cycloalkyl, phenyl or benzyl.

10. The pigment preparation as claimed in one or more of claims 1 to 8, **characterized in that** the pigment of formula (1) has a particle size (d₅₀) of 30 to 500 nm.

11. The pigment preparation as claimed in one or more of claims 1 to 9, containing auxiliaries from the group of fillers, flame retardants, preservatives, photoprotectants, pigmentary and nonpigmentary dispersants, surfactants, antioxidants, resins, waxes, defoamers, antistats or charge control agents.

12. A process for producing the pigment preparations as claimed in one or more of claims 1 to 10, **characterized in that** the pigment of formula (1) is mixed as powder, granulate, presscake or suspension with at least one copolymer (B) in the presence of water or of an organic solvent or of a mixture of water and organic solvent and subsequently isolated in solid form.

13. The use of the pigment preparation as claimed in one or more of claims 1 to 10 for pigmentation and dyeing of natural and synthetic materials.

14. The use as claimed in claim 12 for pigmentation of wallpaper colors, printing inks, emulsion and gloss colors, electrophotographic toners and developers, ink-jet inks, and color filters.

15. An electrophotographic toner containing 30% to 99.99% by weight of a binder, 0.001% to 50% by weight of the pigment preparation as claimed in one or more of claims 1 to 10, optionally 0.001 % to 50% by weight of a further colorant, optionally 0.01 % to 50% by weight of a wax and optionally 0.01 % to 50% by weight of a charge control agent, all based on the total weight of the electrophotographic toner.

## Revendications

1. Préparation de pigment solide, contenant
A) 5 à 99 % en poids d'un pigment azoïque de formule (1) 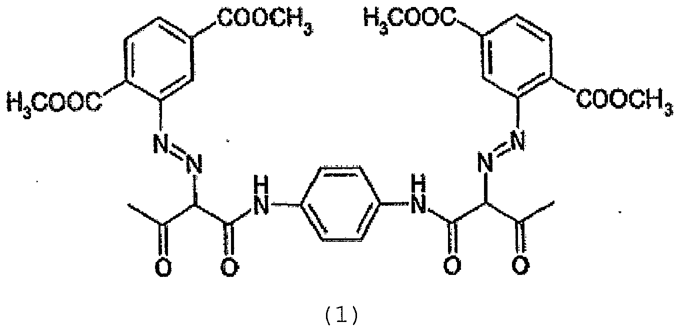
B) 1 à 95 % en poids d'un copolymère, contenant les motifs structuraux suivants :
(i) 1 à 70 % en moles du motif structural B1 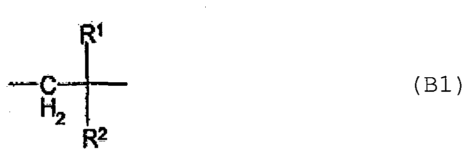
(ii) 1 à 70 % en moles du motif structural B2 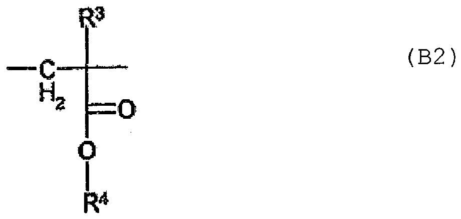
(iii) 1 à 70 % en moles du motif structural B3 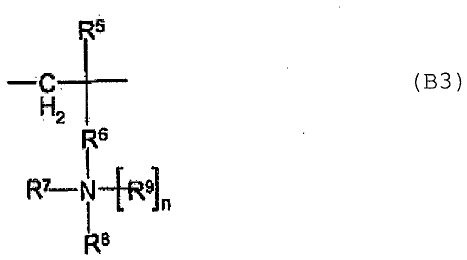
où
R¹, R³ et R⁵ représentent, chacun indépendamment des autres, un atome d'hydrogène ou un groupe alkyle en C₁-C₄,
R² représente un groupe alkyle en C₁-C₆₀, aryle en C₆-C₁₈, alkylène(C₁-C₄)-aryle(C₆-C₁₂) ou hétéroaryle en C₃-C₁₈,
R⁴ représente un groupe alkyle en C₁-C₄₀ linéaire ou ramifié, cycloalkyle en C₅-C₃₀, alkylène (C₁-C₄)-aryle (C₆-C₁₂) ou aryle en C₆-C₃₀,
R⁶ représente -COO-(CH₂)ₚ-,
p représente un nombre compris entre 1 et 8,
R⁷, R⁸ et R⁹ représentent, chacun indépendamment des autres, un atome d'hydrogène, un groupe alkyle en C₁-C₄₀ linéaire ou ramifié, cycloalkyle en C₅-C₃₀, aryle en C₆-C₃₀ ou benzyle, et
n représente un nombre compris entre zéro et 1.

2. Préparation de pigment selon la revendication 1, contenant
(A) 40 à 95 % en poids d'un pigment azoïque de formule (1) et
(B) 5 à 60 % en poids du copolymère.

3. Préparation de pigment selon la revendication 1 ou 2, **caractérisée en ce que** le copolymère (B) contient
(i) 5 à 60 % en moles du motif structural B1,
(ii) 5 à 60 % en moles du motif structural B2 et
(iii) 5 à 60 % en moles du motif structural B3.

4. Préparation de pigment selon une ou plusieurs des revendications 1 à 3, **caractérisée en ce que** le copolymère (B) consiste à raison de
(i) 1 à 70 % en moles en le motif structural B1,
(ii) 1 à 70 % en moles en le motif structural B2 et
(iii) 1 à 70 % en moles en le motif structural B3.

5. Préparation de pigment selon une ou plusieurs des revendications 1 à 4, **caractérisée en ce que** le copolymère (B) consiste à raison de
(i) 5 à 60 % en moles en le motif structural B1,
(ii) 5 à 60 % en moles en le motif structural B2 et
(iii) 5 à 60 % en moles en le motif structural B3.

6. Préparation de pigment selon une ou plusieurs des revendications 1 à 4, **caractérisée en ce que** R¹, R³ et R⁵ sont identiques ou différents et représentent un atome d'hydrogène ou le groupe méthyle.

7. Préparation de pigment selon une ou plusieurs des revendications 1 à 5, **caractérisée en ce que** R² représente un groupe alkyle en C₆-C₃₀, aryle en C₆-C₁₀, benzyle, des hétérocycles en C₃-C₉ aromatiques azotés à cinq ou six chaînons.

8. Préparation de pigment selon une ou plusieurs des revendications 1 à 6, **caractérisée en ce que** R⁴ représente un groupe alkyle en C₁-C₂₀, cycloalkyle en C₅-C₆, benzyle, phényle ou naphtyle.

9. Préparation de pigment selon une ou plusieurs des revendications 1 à 7, **caractérisée en ce que** R⁷, R⁸ et R⁹ sont identiques ou différents et représentent un atome d'hydrogène, un groupe alkyle en C₁-C₈, cycloalkyle en C₅-C₆, phényle ou benzyle.

10. Préparation de pigment selon une ou plusieurs des revendications 1 à 8, **caractérisée en ce que** le pigment de formule (1) a une taille de particule (d₅₀) de 30 à 500 nm.

11. Préparation de pigment selon une ou plusieurs des revendications 1 à 9, contenant des adjuvants choisis dans le groupe constitué par des charges, des agents ignifuges, des conservateurs, des photoprotecteurs, des dispersants pigmentaires et des dispersants non pigmentaires, des tensioactifs, des antioxydants, des résines, des cires, des antimousses, des agents antistatiques ou des agents régulateurs de charge.

12. Procédé pour la production des préparations de pigments selon une ou plusieurs des revendications 1 à 10, **caractérisé en ce qu'**on mélange avec au moins un copolymère (B) le pigment de formule (1) sous forme de poudre, granulé, tourteau de filtration ou suspension, en présence d'eau ou d'un solvant organique ou d'un mélange d'eau et de solvant organique et ensuite on l'isole sous forme solide.

13. Utilisation de la préparation de pigment selon une ou plusieurs des revendications 1 à 10, pour la pigmentation et la coloration de matériaux naturels et de matériaux synthétiques.

14. Utilisation selon la revendication 12, pour la pigmentation de couleurs pour papiers-peints, d'encres d'impression, de peintures laquées et en dispersion, de toners et développeurs électrophotographiques, d'encres pour impression par jet d'encre, et de filtres colorés.

15. Toner électrophotographique, contenant 30 à 99,99 % en poids d'un liant, 0,001 à 50 % en poids de la préparation de pigment selon une ou plusieurs des revendications 1 à 10, éventuellement 0,001 à 50 % en poids d'un autre agent colorant, éventuellement 0,01 à 50 % en poids d'une cire, et éventuellement 0,01 à 50 % en poids d'un agent régulateur de charge, chacun par rapport au poids total du toner électrophotographique.
